Europäisches Patentamt

(19) European Patent Office

Office européen des brevets

(11) Publication number: **0 274 045 B1**

# EUROPEAN PATENT SPECIFICATION

(12)

(45) Date of publication of patent specification :
05.06.91 Bulletin 91/23

(51) Int. Cl.⁵ : **G01C 22/02**

(21) Application number : 87117399.3

(22) Date of filing : 25.11.87

(54) Electronic odometer.

(30) Priority : 28.11.86 IT 6788886

(43) Date of publication of application :
13.07.88 Bulletin 88/28

(45) Publication of the grant of the patent :
05.06.91 Bulletin 91/23

(84) Designated Contracting States :
DE FR GB NL

(56) References cited :
EP-A- 0 139 770
FR-A- 2 551 202

(56) References cited :
PATENT ABSTRACTS OF JAPAN, vol. 9, no.
265 (P-399)[1988], 23rd October 1985; & JP-
A-60 114 711 (HITACHI SEISAKUSHO K.K.)
21-06-1985
PATENT ABSTRACTS OF JAPAN, vol. 8, no.
265 (P-318)[1702], 5th December 1984; & JP-
A-59 135 312 (NIPPON DENSO K.K.) 03-08-1984

(73) Proprietor : IVECO FIAT S.p.A.
Via Puglia 35
I-10156 Torino (IT)

(72) Inventor : Incardona, Mario
Corso Torino, 3/C
I-10095 Grugliasco (IT)
Inventor : Montuschi, Mario
Via O. Vigliani, 35/15
I-10135 Torino (IT)

(74) Representative : Prato, Roberto et al
STUDIO TORTA Società Semplice Via Viotti 9
I-10121 Torino (IT)

EP 0 274 045 B1

## Description

This invention relates to an electronic odometer, particularly but not exclusively for use in indicating the distance traversed by a vehicle.

The considerable use of electronics in the vehicle field, for example as embodied in specific devices such as the so-called trip computers, is known to have resulted in continuous transformation of most of the indicating and control equipment on board vehicles, which up to a few years ago had involved mainly mechanical or electromechanical technology.

In the specific field of indicating the distance traversed by a vehicle, the electronic odometer has supplanted the mechanical odometer which comprises a plurality of side-by-side indicator drums suitably connected together. It is noted however that current electronic odometers are substantially limited in their use, due to the fact that they require considerably memory availability to maintain information relative to the tens (sometimes hundreds) of thousands of kilometres or miles traversed by the vehicle on which they are installed. This also involves excessive size and cost which are unacceptable when compared with the size and cost of the corresponding mechanical version. For these reasons, electronic odometers have not up to the present time obtained the same widespread use as other vehicle equipment using electronic technology.

EPO 0 139 770 shows an electronic odometer of the type mentioned above, in which the distance traveled by the automobile is written, after each predetermined distance traveled, into a location of a non-volatile memory, so that data on the total distance traveled is stored.

Unfortunately, the structure of said electronic odometer does not enable programming errors to be easily detected and does not enable the substitution of the non-volatile memory to be recognised.

The object of the present invention is to provide an electronic odometer able to obviate the aforesaid drawbacks of known electronic odometers.

Said object is attained according to the present invention by an electronic odometer of the type comprising :
- processor means able to receive data relative to the distance traversed by a vehicle ;
- memory means in which said processor means record information relative to said distance comprising at least one non-volatile memory and at least one volatile memory ; and
- display means which display the information contained in said memory means ; characterised in that :
- the non-volatile memory is a once only programmable memory for storage of data relative to the more significant digits of the total distance traversed as expressed in the unit of measurement ; data relative to the less significant digits of the total distance traversed as expressed in the unit of measurement being storable in the volatile memory.

The present invention will be more apparent from the description of one embodiment thereof given hereinafter by the way of non-limiting example with reference to the accompanying drawings, in which :

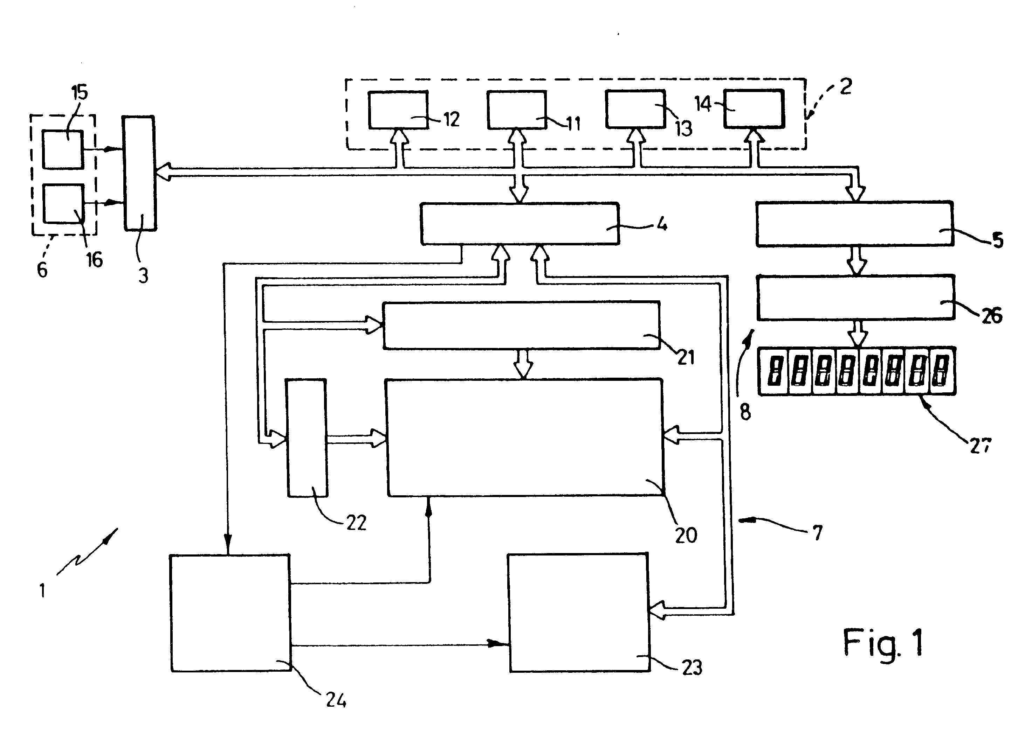

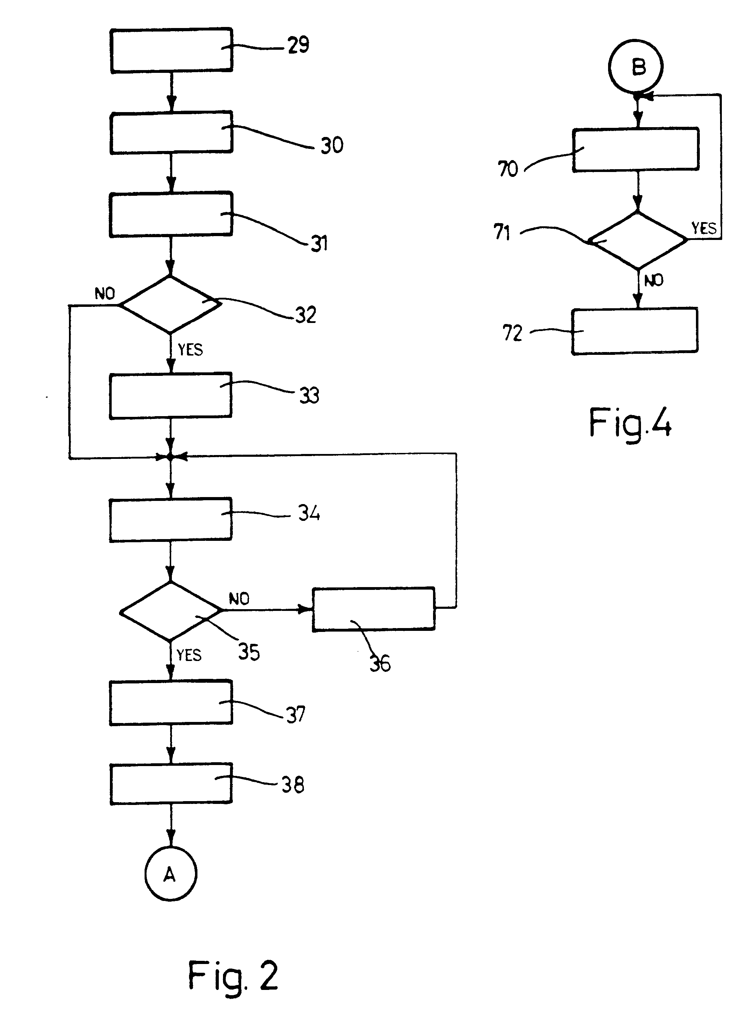

Figure 1 is a block diagram of an electronic odometer constructed in accordance with the present invention ; and Figures 2, 3 and 4 are flow diagrams of one embodiment of a main program for an arithmetic processor unit of the odometer of Figure 1.

In Figure 1, the reference numeral 1 indicates overall an electronic odometer constructed in accordance with the present invention and advantageously used for indicating the distance traversed by a vehicle. The odometer 1 comprises essentially a processor unit 2, which by way of a plurality of interface units 3, 4 and 5 is connected respectively to input means 6, to memorising means 7 and to display means 8.

The processor unit 2 comprises a calculation unit 11, a read-only memory 12 (ROM) containing the program for the processor unit 2, a random access memory 13 (RAM) in which, when in use, the data relative to the digits considered less significant of the distance traversed by said vehicle are memorised, and an auxiliary random access memory 14 (conveniently of the NOVARAM type) into which, when in use, the data memorised in the memory 13 are temporarily transferred in the case of sudden drop in supply voltage.

The input means 6 comprises a device 15 arranged to generate electrical pulses, the frequency of which is proportional to the distance traversed by the vehicle, and the device 16 which feeds an enabling signal to the unit 2 every time the vehicle engine is started and the vehicle is about to traverse a distance.

The memorising means 7 comprises essentially a once-only programmable non-volatile memory 20 (for example of PROM type), a pair of address decoders 21, 22, a memory programming unit 23 and a read-write enabling unit 24. In the considered example, the memory 20 comprises 16 areas selectable by the decoder 22, each of which contains 128 columns selectable by the decoder 21. Finally, each column contains 8 elementary locations. The capacity of the memory 20 is therefore exactly $16 \times 128 \times 8 = 16384$ elementary locations.

The display means 8 comprises a decoder unit 26 and a display unit 27 conveniently consisting of a plurality of seven-segment indicators (eight in all). When in use, the display unit 27 carries data relative to the distance traversed, with the less significant digits to the right, commencing for example with hundreds of metres.

The operation of the electronic odometer 1 is described hereinafter with particular reference to Figures 2, 3 and 4, each of which shows a program which is executed by the unit 11 during vehicle starting, during normal running and in the case of sudden drop in supply voltage respectively.

With reference to Figures 1 and 2, on engine start, the device 16 senses for example the ride in supply voltage of the processor unit 2, and enables the program of Figure 2. This program then commences with a starting block 29 enabled by the device 16. It then passes to a block 30 which transfers the contents of the memory 14 (NOVARAM) into the memory 13 (RAM). From the block 30 it passes to a block 31 which reads the contents of the memory 13, which is directly supplied by the vehicle battery, as is the entire unit 2.

The memory 13 is arranged to contain information of a predetermined distance, for example 99.9 km, so that an indication exceeding this value must be considered an error. The contents of the memory 13 are compared, within a block 32, with the value 100. If the contents are greater than or equal to 100, the program leads to a block 33 which zeroes the contents of the memory 13. In contrast, if the contents are less than 100, the program passes directly to the input of a block 34 which reads the contents of the memory 20.

Besides containing information on the distance traversed in the form of an activated memory location (sequentially burnt bit) every 100 km of distance traversed by the vehicle, the memory 20 also contains the identification codes preset on assembling the odometer on the vehicle. These codes create an unbreakable link between the memory 20 and the unit 2, in order to enable the unit 2 to check whether the memory 20, which contains the more significant digits of the distance traversed by the vehicle, has been tampered with or replaced.

From the block 34, the program passes to the checking block 35, which checks whether the contents of the memory 20 are regular, ie whether the identification code contained in it corresponds to that memorized in the unit 2, and whether all the memory locations activated up to that moment have been correctly activated (all bits burnt in sequence).

If an error is encountered during this check, the program passes to an alarm signalling block 36, which for example causes the display unit 27 to blink, and generates a further check on the contents of the memory 20 by way of the blocks 34 and 35.

If the contents of the memory 20 are considered correct, they are added, within a block 37, to the contents of the memory 13, and the result is transmitted to a block 38 which displays it on the unit 27.

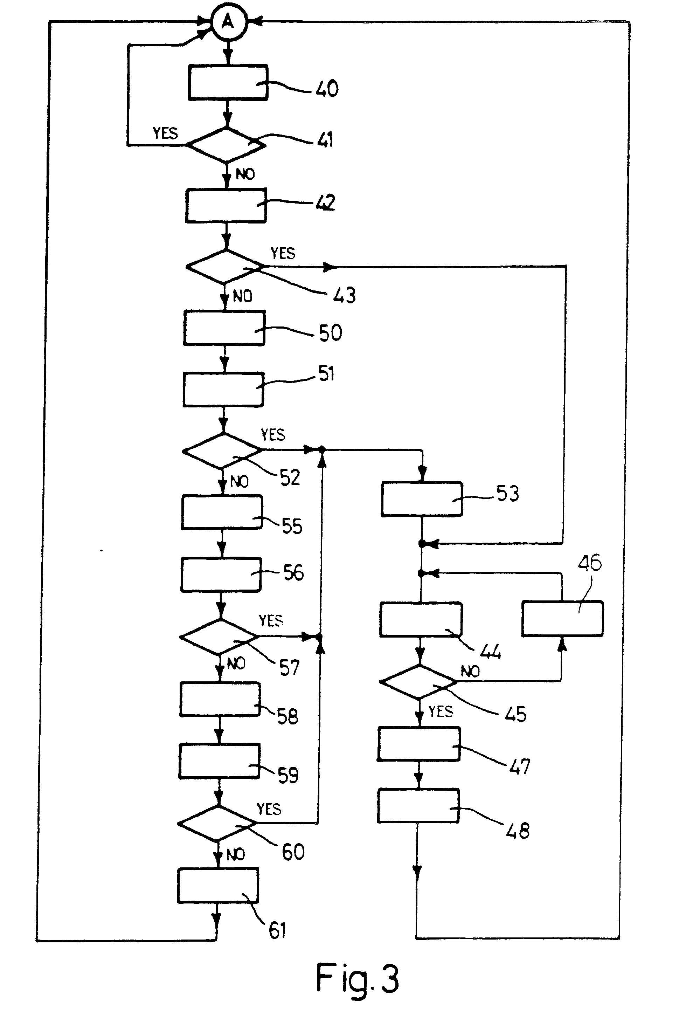

Finally, a node A is reached, this representing the end of the program executed during the starting phase and the commencement of the program to be executed during normal running of the vehicle, as shown in Figure 3.

With particular reference to Figures 1 and 3, the program passes from the node A to a block 40, which reads the signal provided by the pulse generator device 15. This signal is for example counted and compared, within a block 41, with a signal corresponding to a distance of 100 m. If the distance traversed by the vehicle is less than 100 m, the program returns from the block 41 to the node A, and reading of the signal provided by the device 15 is repeated. If this distance is equal to 100 m, the program passes to a block 42 which increments the data contained in the memory 13 by 0.1 km.

The program then passes to a block 43, which checks whether the contents of the memory 13 are less than 100 km.

If this check is positive (contents of memory 13 less than 100), the program passes to a block 44, which reads the contents of the memory 20. The operations executed after reading the contents of the memory 20 are effected by the blocks 45, 46, 47 and 48, the purpose of which is entirely identical to that of the blocks 35, 36, 37, and 38, described heretofore with reference to Figure 2. If this check is negative (contents of memory 13 equal to 100), the program passes from the block 43 to a block 50 which zeroes the contents of the memory 13. The program than passes from the block 50 to a block 51, which increments by one unit a pointer register (within the unit 2) of the memory 20.

The program then passes to a block 52, which checks whether the contents of the said pointer register are less than or equal to 8.

If positive (contents of pointer register less than or equal to 8), an enabling signal is fed to a block 53, which by means of the units 23 and 24 programs in sequence (by bit burning) a location of the memory 20. In other words, this programming corresponds to the indelible recording of a 100 km increment of the contents of the memory 20. The program then passes from the block 53 to the block 44 in order to execute the checking and reading of the memories 13 and 20 as heretofore described.

If negative (contents of pointer register greater than 8), the program passes to a block 55 which zeroes the contents of this pointer register. The program then passes from the block 55 to a block 56 which increments the contents of the address decoder 21 by one unit.

It then passes to a block 57, which checks whether the contents of the address decoder 21 are less than or equal to 128. If positive (contents of decoder 21 less than or equal to 128), it again passes to the input of the block 53 with consequent indelible recording of an increment of 100 km in the contents of the memory 20, then continuing in the manner heretofore described.

If negative (contents of decoder 21 greater than 128), the program passes to a block 58 which zeroes the contents of this decoder. From the block 58 it passes to a block 59, by which the contents of the address decoder 22 are incremented by one unit.

It finally passes to a block 60, which checks whether the contents of the address decoder 22 are less than or equal to 16. If positive (contents of decoder 22 less than or equal to 16), it again passes to the input of the block 53, to continue in the manner heretofore described.

If negative (contents of decoder 22 greater than 16), it passes to a block 61 which emits a signal indicating that the distance counted by the odometer 1 has reached its maximum capacity (overflow). This signal could for example consist of intermittent indication of the maximum number of kilometres (namely 1,638,499.9) which can be indicated by the odometer.

The behaviour of the odometer 1 in the case of drop in supply voltage is described hereinafter with particular reference to Figures 1 and 4. In this respect, whatever operation the odometer 1 is executing, the value of the supply voltage is read continuously by the block 70. This value is then compared (within a block 71) with a reference value. If the value read is greater than the minimum reference value (reply YES), the program returns to the input of the block 70 and the supply voltage is again read. If the value read is less than or equal to the said minimum reference value (reply NO), the program passes to a block 72 which transfers the contents of the memory 13 (RAM) into the memory 14 (NOVARAM) to prevent loss of data memorised at that moment in the memory 13.

The advantages of the odometer constructed in accordance with the present invention are apparent from an examination of its characteristics.

Firstly, it can be seen that only a small memory capacity is required (that of the non-volatile memory 20 for the more significant digits and that of the volatile memory 13 for the less significant digits) to maintain information relative to a very large number of kilometres, this number being much greater than the maximum distance through which current vehicles travel.

The memory 20 required is currently available in a single integrated circuit of small overall size and not excessive cost.

The particular structure of the odometer according to the invention and its specific operation enable programming errors to be easily detected (bits burnt non-sequentially etc.), and enables tampering of the instrument panel (substitution of the memory 20 etc.) to be recognised. It is also impossible to reduce the contents of the non-volatile memory 20.

Finally, it is obvious that modifications can be made to the electronic odometer heretofore described but without leaving the scope of the present invention.

For example, the unit of measurement used for indicating the distance obviously does not constitute a limitation, and this could therefore be the mile instead of the kilometre.

It is also apparent that the structure of the electronic odometer 1 illustrated in Figure 1 could undergo considerable modification in accordance with the constant technological development of the electronic component sector, while remaining within the scope of the claims.

## Claims

1. An electronic odometer of the type comprising:
   – processor means (2) able to receive data relative to the distance traversed by a vehicle ;
   – memory means (7) in which said processor means record information relative to said distance comprising at least one non-volatile memory (20) and at least one volatile memory (13) ; and
   – display means (8) which display the information contained in said memory means ; characterised in that :
   – the non-volatile memory (20) is a once only programmable memory for storage of data relative to the more significant digits of the total distance traversed as expressed in the unit of measurement ; data relative to the less significant digits of the total distance traversed as expressed in the unit of measurement being storable in the volatile memory (13).

2. An odometer as claimed in claim 1, characterised in that said non-volatile memory (20) contains coded information to be checked by said processor means on starting said vehicle.

3. An odometer as claimed in claim 2, characterised by comprising means (16) for sensing the electrical supply to said processor means ; said sensing means (16) initiating the execution of a checking program by said processor means in order to check whether said coded information memorised is said non-volatile memory is exact, by comparison with corresponding information memorised in a non-volatile service memory (12) of said processor means.

4. An odometer as claimed in any one of the preceding claims, characterised by comprising address decoder means (21, 22) associated with said non-volatile memory (20) and controlled by said processor means in order to engage adjacent locations of said non-volatile memory (20) in sequence ; each said memory location engaged corresponding to an increment in the distance traversed by said vehicle.

5. An odometer as claimed in claim 4, characterised in that said processor means is adapted to check the contents of said volatile memory (13) and cause the engagement of one of said locations of said non-volatile memory (20) each time the contents of said volatile memory reach a predetermined maximum value.

6. An odometer as claimed in any one of the preceding claims, characterised in that said display means comprise a first group of display elements and a second group of display elements, on which the information contained in said non-volatile memory (20) and in said volatile memory (13) is displayed respectively.

7. An odometer as claimed in any one of the preceding claims, characterised by comprising a non-volatile auxiliary memory (14) into which the data contained in said volatile memory (13) are temporarily transferred if a drop in supply voltage occurs.

## Ansprüche

1. Elektronischer Wegstreckenmesser mit
- einer Prozessoreinrichtung (2), die Daten bezüglich einer von einem Fahrzeug zurückgelegten Wegstrecke empfängt,
- einer Speichereinrichtung (7), in welche die Prozessoreinrichtung (2) Information bezüglich der Wegstrecke einschreibt, wobei die Speichereinrichtung (7) wenigstens einen nicht-flüchtigen Speicher (20) und wenigstens einen flüchtigen Speicher (13) aufweist, und
- einer Anzeigeneinrichtung (8) zum Anzeigen der in der Speichereinrichtung enthaltenen Information, **dadurch gekennzeichnet**, daß der nicht-flüchtige Speicher (20) ein nur einmal programmierbarer Speicher zur Speicherung von Daten bezüglich signifikanterer Ziffern der zurückgelegten Gesamtwegstrecke, ausgedrückt in Meßeinheiten, ist, und Daten bezüglich weniger signifikanter Ziffern der zurückgelegten Gesamtwegstrecke, ausgedrückt in Meßeinheiten, im flüchtigen Speicher (13) speicherbar sind.

2. Elektronischer Wegstreckenmesser nach Anspruch 1, **dadurch gekennzeichnet**, daß der nicht-flüchtige Speicher (20) kodierte Information enthält, die durch die Prozessoreinrichtung geprüft wird, wenn das Fahrzeug startet.

3. Elektronischer Wegstreckenmesser nach Anspruch 2, **gekennzeichnet durch** Mittel (16) zum Abfühlen einer elektrischen Versogung für die Prozessoreinrichtung (2), wobei die Abfühlmittel (16) die Ausführung eines Prüfprogramms durch die Prozessoreinrichtung veranlassen, um zu prüfen, ob die im nicht-flüchtigen Speicher gespeicherte, kodierte Information exakt ist, und zwar durch Vergleich mit korrespondierender Information, die in einem nicht-flüchtigen Servicespeicher (12) der Prozessoreinrichtung gespeichert ist.

4. Elektronischer Wegstreckenmesser nach einem der vorhergehenden Ansprüche, **gekennzeichnet durch** Adreßdekodiermittel (21, 22), die dem nicht-flüchtigen Speicher (20) zugeordnet sind und von der Prozessoreinrichtung gesteuert werden, um der Reihe nach auf benachbarte Bereiche des nicht-flüchtigen Speichers (20) zuzugreifen, wobei jeder der Speicherbereiche, auf den zugegriffen wird, in Übereinstimmung mit einem Inkrement der zurückgelegten Wegstrecke des Fahrzeugs steht.

5. Elektronischer Wegstreckenmesser nach Anspruch 4, **dadurch gekennzeichnet**, daß die Prozessoreinrichtung die Inhalte des flüchtigen Speichers (13) prüft und einen der Bereiche des nicht-flüchtigen Speichers (20) jedes Mal dann aufruft, wenn die Inhalte des flüchtigen Speichers einen vorbestimmten Maximalwert erreichen.

6. Elektronischer Wegstreckenmesser nach einem der vorhergehenden Ansprüche, **dadurch gekennzeichnet**, daß die Anzeigeeinrichtung eine erste Gruppe von Displayelementen und eine zweite Gruppe von Displayelementen aufweist, mit denen sich die Information, die jeweils im nicht-flüchtigen Speicher (20) und im flüchtigen Speicher (13) gespeichert ist, darstellen läßt.

7. Elektronischer Wegstreckenmesser nach einem der vorhergehenden Ansprüche, **gekennzeichnet durch** einen nicht-flüchtigen Hilfsspeicher (14), in den Daten, die im flüchtigen Speicher (13) gespeichert sind, vorübergehend eingeschrieben werden, wenn ein Abfall der Versorgungsspannung auftritt.

## Revendications

1. Odomètre électronique, du type comprenant
- des moyens formant processeur (2) aptes à recevoir des données concernant la distance parcourue par un véhicule ;
- des moyens de mémoire (7), dans lesquels lesdits moyens formant processeur enregistrent l'information relative à ladite distance et qui comprennent au moins une mémoire rémanente (20) et au moins une mémoire volatile (13) ; et
- des moyens d'affichage (8), qui affichent l'information contenue dans lesdits moyens de mémoire ; caractérisé en ce que :
- la mémoire rémanente (20) est une mémoire programmable une seule fois, servant à mémoriser des données concernant les bits les plus importants de la distance totale parcourue, exprimée avec l'unité de mesure ; les données relatives aux chiffres de poids les plus faibles de la distance totale parcourue, exprimée avec l'unité de mesure, pouvant être mémorisées dans la mémoire volatile (13).

2. Odomètre selon la revendication 1, caractérisé en ce que ladite mémoire rémanente (1) contient une information codée devant être vérifiée par lesdits moyens formant processeur lors du démarrage dudit véhicule.

3. Odomètre selon la revendication 2, caractérisé en ce qu'il comprend des moyens (16) pour détecter l'alimentation électrique envoyée auxdits moyens formant processeur ; lesdits moyens de détection (16) déclenchant l'exécution d'un programme de contrôle par lesdits moyens formant processeur pour vérifier si ladite information codée mémorisée dans ladite mémoire rémanente est exacte, par comparaison à une information correspondante mémorisée dans une mémoire de service rémanente (12) desdits moyens formant processeur.

4. Odomètre selon l'une quelconque des revendications précédentes, caractérisé en ce qu'il comporte des moyens formant décodeurs d'adresses (21, 22) associés à ladite mémoire rémanente (20) et commandés par lesdits moyens formant processeur pour activer séquentiellement des emplacements adjacents de ladite mémoire rémanente (20) ; chacun desdits emplacements de mémoire activés correspondant à un incrément de la distance parcourue par ledit véhicule.

5. Odomètre selon la revendication 4, caractérisé en ce que ledit processeur est adapté pour vérifier le contenu de ladite mémoire rémanente (13) et déclencher. l'activation de l'un desdits emplacements de ladite mémoire rémanente (20) chaque fois que le contenu de ladite mémoire volatile atteint une valeur maximale prédéterminée.

6. Odomètre selon l'une quelconque des revendications précédente, caractérisé en ce que lesdits moyens d'affichage comprennent un premier groupe d'éléments d'affichage et un second groupe d'éléments d'affichage, sur lesquels est affichée respectivement l'information contenue dans ladite mémoire rémanente (20) et dans ladite mémoire volatile (13).

7. Odomètre selon l'une quelconque des revendications précédentes, caractérisé en ce qu'il comporte une mémoire auxiliaire rémanente (14), dans laquelle les données contenues dans ladite mémoire rémanente (13) sont transférées temporairement s'il se produit une chute de la tension d'alimentation.

Fig. 1

Fig. 2

Fig.4

Fig. 3